## Europäisches Patentamt

## European Patent Office

## Office européen des brevets

(19)

(11) Numéro de publication: **0 239 439 B1**

(12) **FASCICULE DE BREVET EUROPEEN**

(45) Date de publication du fascicule du brevet: 14.11.90

(51) Int. Cl.⁵: **B29C 53/08**, D06J 1/12, D04H 1/00, D04C 1/06

(21) Numéro de dépôt: 87400385.8

(22) Date de dépôt: 23.02.87

(54) Procédé de fabrication d'une structure tubulaire stratifiée pour le renfort d'une pièce en matériau composite, et pièce ainsi obtenue.

(30) Priorité: 28.03.86 FR 8604531

(43) Date de publication de la demande: 30.09.87 Bulletin 87/40

(45) Mention de la délivrance du brevet: 14.11.90 Bulletin 90/46

(84) Etats contractants désignés: **DE GB IT**

(56) Documents cités:
FR-A- 1 491 106
FR-A- 2 276 916
FR-A- 2 537 171
GB-A- 561 544
US-A- 3 409 224

(73) Titulaire: **SOCIETE EUROPEENNE DE PROPULSION, 24 rue Salomon de Rothschild, F-92150 Suresnes(FR)**

(72) Inventeur: **Denoel, Jean Denis, 48, rue Jean Vallès, F-33400 Talence(FR)**

(74) Mandataire: **Joly, Jean-Jacques et al, CABINET BEAU DE LOMENIE 55, rue d'Amsterdam, F-75008 Paris(FR)**

ACTORUM AG

## Description

La présente invention concerne la fabrication d'une structure tubulaire stratifiée, et plus précisément la fabrication d'une structure comprenant des couches de matériau fibreux qui sont superposées en direction axiale et s'étent chacune depuis la surface intérieure jusqu'à la surface extérieure de la structure.

Le domaine d'application de l'invention est plus particulièrement, mais non exclusivement, la fabrication de structures fibreuses de renfort constituant des préformes pour la réalisation de pièces en matériau composite, par exemple des protections thermiques ablatives pour propulseurs à poudre.

Différents procédés sont utilisés pour réaliser des préformes de renfort pour pièces de révolution en matériau composite.

Un de ces procédés consiste à empiler des anneaux de matériau fibreux et, éventuellement, à les lier entre eux, par exemple par aiguilletage, pour former une préforme qui est ensuite densifiée pour obtenir la pièce de révolution désirée (voir notamment FR-A 2 414 574 et FR-A 2 506 672). Ce procédé est utilisable pour réaliser des pièces de relativement faible épaisseur, comme des disques de frein, mais n'est plus adapté lorsque les pièces à réaliser ont une dimension axiale plus grande.

Un autre procédé consiste à bobiner sur un mandrin des fils, rubans ou bandes de matériau fibreux en couches superposées. Les couches peuvent être liées entre elles de différentes façons, par exemple par aiguilletage ou couture (voir FR-A 2 584 107), ou encore au moyen constituer eux-mêmes des éléments de liaison radiaux, soit pour réserver le passage à des éléments de renfort radiaux mis en place après bobinage (voir US-A 3 577 294).

Par rapport à ce dernier procédé, la présente invention a pour but de fournir un nouveau procédé qui permette également de réaliser des pièces ayant toute dimension axiale désirée, mais tout en apportant une résistance accrue à l'ablation en particulier lorsque les pièces sont soumises à des écoulements gazeux à haute température.

Ce but est atteint au moyen d'un procédé selon lequel, conformément à l'invention, on utilise une tresse tubulaire et on replie sa paroi sur elle-même pour former des ondulations ou replis qui constituent les couches de matériau fibreux superposées en direction axiale.

Grâce à la déformabilité de la tresse, il est possible d'obtenir une structure dans laquelle les couches peuvent avoir toute orientation désirée par rapport à l'axe de la structure. En particulier, dans le cas d'une application à la fabrication de protections thermiques composites, la résistance à l'ablation peut être améliorée par une orientation à "lisse-poil" des fibres par rapport à l'écoulement gazeux.

De plus, dans chaque ondulation, ou repli, les fibres s'étendent depuis l'intérieur jusqu'à l'extérieur de la structure tubulaire. Ainsi, même si la partie interne de la structure se dégrade sous l'action d'un écoulement gazeux intense à haute température, la partie froide externe des fibres reste bien ancrée et l'orientation des fibres favorise l'évacuation des gaz de pyrolyse provenant de la dégradation de la partie interne sans délaminer la structure.

L'invention sera mieux comprise à la lecture de la description faite ci-après à titre indicatif mais non limitatif en référence aux dessins annexés sur lesquels :

- la figure 1 est une vue très schématique d'une tresse utilisable pour la mise en oeuvre du procédé selon l'invention, et
- la figure 2 illustre très schématiquement la formation d'une structure tubulaire au moyen d'une tresse telle que celle de la figure 1.

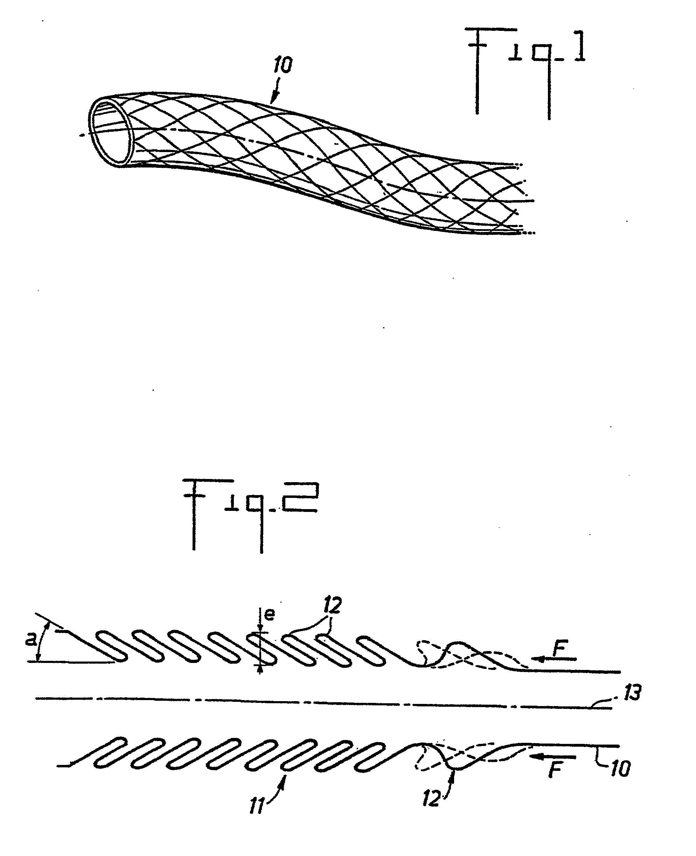

La figure 1 illustre une tresse tubulaire 10 constituant le produit de départ pour la fabrication d'une structure suivant le procédé de l'invention. Comme le montre la figure 2, la structure 11 est réalisée en repliant la tresse sur elle-même par translation suivant son axe (flèches F) pour former des ondulations ou replis 12. Ces derniers sont appliqués les uns sur les autres et forment des couches qui sont superposées en direction axiale et s'étendent chacune depuis la surface intérieure jusqu'à la surface extérieure de la structure 11.

Dans l'exemple illustré, les replis 12 sont disposés en biais, c'est-à-dire en formant par rapport à l'axe 13 de la structure 11 un angle $a$ compris entre quelques degrés et 90| L'amplitude des ondulations ou replis 12 détermine, avec l'angle $a$, l'épaisseur $e$ de la structure 11, c'est-à-dire la distance entre surface intérieure et surface extérieure.

Suivant les propriétés géométriques de la tresse (diamètre, angles formant entre elles les mèches constitutives de la tresse, ...) et en profitant de ses capacités de déformation, il est possible d'obtenir une structure dans laquelle l'angle $a$ et l'épaisseur $e$ peuvent être réglés volonté. En particulier, l'angle $a$ pourra être égal à 90|, c'est-à-dire avec des replis 12 perpendiculaires à l'axe 13.

Le procédé selon l'invention s'applique à l'élaboration de structures tubulaires dont la section droite n'est pas obligatoirement circulaire, et dont le lieu du centre de gravité de la section droite n'est pas nécessairement rectiligne. On pourra également, le long de l'axe de la structure 11, faire varier l'épaisseur $e$ en modifiant l'amplitude et/ou l'inclinaison des replis 12.

Comme déjà indiqué, l'invention vise plus particulièrement la fabrication de structures tubulaires constituant des préformes de renfort fibreuses pour réaliser des pièces en matériau composite, notamment des pièces ablatives.

Le matériau constitutif de la tresse tubulaire 10 est choisi en fonction de l'application envisagée pour la structure. S'agissant de renfort pour pièce composite destinée à être soumise à des contraintes thermiques élevées, on choisira une tresse réalisée à partir de fibres réfractaires ou de précurseurs de celles-ci, par exemple une tresse en fibres PAN (polyacrylonitrile) préoxydé, précurseur du carbone. La tresse est fabriquée à partir des fibres choisies par tout procédé textile connu pour la réalisation de tresses tubulaires.

Après repliage de la tresse sur elle-même, la structure tubulaire obtenue peut être renforcée, par exemple en étant soumise à une opération d'aiguilletage en direction transversale par rapport aux replis 12. Ensuite, pour obtenir la pièce composite désirée, la structure est densifiée par dépôt à cœur d'un matériau formant matrice, par exemple une résine thermodurcissable, du carbone ou un autre matériau réfractaire, par exemple tu type céramique. Divers procédés de densification peuvent être utilisés, par exemple l'infiltration chimique en phase vapeur, ou l'imprégnation liquide suivie d'un traitement thermique, ou encore une infiltration précédée d'une pré-imprégnation. Le matériau constitutif de la matrice, comme celui constitutif de la structure de renfort, est choisi en fonction de l'application envisagée. Il pourra s'agir de résine, de carbone pyrolytique ou d'un autre matériau réfractaire tel que le carbure de silicium, déposé en phase vapeur suivant une technique maintenant bien maîtrisée.

La structure obtenue selon l'invention est bien adaptée à la réalisation de protections thermiques, notamment pour rallonges arrière de propulseurs à poudre car la résistance à l'ablation causée par l'écoulement des gaz de combustion à haute température peut être sensiblement accrue grâce à une orientation à "lisse-poil" des replis 12 et donc des fibres de la structure 11. De plus, dans chaque repli 12, les fibres partent de la surface intérieure de la structure et s'étendent jusqu'à la surface extérieure. Ainsi, lorsque la partie chaude interne de la structure se dégrade sous l'effet de l'écoulement des gaz chauds, les fibres située dans cette partie restent bien ancrées dans la partie froide externe et les gaz de pyrolyse peuvent facilement s'évacuer vers l'intérieur du tube sans compromettre sa tenue.

Bien entendu, le procédé selon l'invention n'est pas limité à la réalisation de structures de renfort pour pièces composites ablatives mais peut s'appliquer dans tous les cas où une structure tubulaire de renfort doit être réalisée, dans la mesure où la tresse tubulaire nécessaire peut être fabriquée.

**Revendications**

1. Procédé de fabrication d'une structure tubulaire stratifiée comprenant des couches de matériau fibreux qui sont superposées en direction axiale et s'étendent chacune depuis la surface intérieure jusqu'à la surface extérieure de la structure, caractérisé en ce que l'on utilise une tresse tubulaire (10) et on replie sa paroi sur elle-même pour former des ondulations ou replis (12) qui constituent lesdites couches de matériau fibreux.

2. Procédé selon la revendication 1, caractérisé en ce que les replis (12) sont disposés en biais par rapport à l'axe de la structure (11).

3. Procédé selon l'une quelconque des revendications 1 et 2, caractérisé en ce que l'on fait varier les replis (12) le long de l'axe de la structure (11) pour donner à celle-ci une épaisseur variable.

4. Procédé selon l'une quelconque des revendications 1 à 3, caractérisé en ce que la structure (11) est renforcée par aiguilletage.

5. Pièce composite comprenant une structure de renfort tubulaire fibreuse densifiée par une matrice, caractérisée en ce que la structure de renfort est constituée par une tresse tubulaire (10) en matériau fibreux dont la paroi est repliée sur elle-même pour former des ondulations ou replis (12) qui constituent des couches de matériau fibreux superposées en direction axiale et s'étendant chacune de la surface intérieure à la surface extérieure de la structure de renfort (11).

6. Pièce composite selon la revendication 5, caractérisée en ce que la structure tubulaire fibreuse (11) est renforcée par aiguilletage.

7. Pièce composite selon l'une quelconque des revendications 5 et 6, formant protection thermique ablative destinée à être soumise à un écoulement gazeux à haute température, caractérisée en ce que les replis (12) de la structure tubulaire (11) sont orientés en biais par rapport à l'axe de la structure, à lisse-poil par rapport à l'écoulement gazeux.

**Claims**

1. Process for producing a tubular laminated structure comprising layers of fibrous material which are superposed in axial direction, each one extending from the inside surface to the outside surface of the structure, characterized in that a tubular braid (10) is used, of which the wall is folded over to form corrugations or wrinkles (12) which constitute said layers of fibrous material.

2. Process according to claim 1, characterized in that the wrinkles (12) are disposed slantwise with respect to the axis of the structure (11).

3. Process according to any one of claims 1 and 2, characterized in that the wrinkles (12) vary along the axis of the structure (11) in order to give a variable thickness to said structure.

4. Process according to any one of claims 1 to 3, characterized in that said structure (11) is reinforced by needling.

5. Composite piece comprising a tubular fibrous reinforcing structure densified by a matrix, characterized in that said reinforcing structure is constituted by a tubular braid (10) of fibrous material, the wall of which is folded over to form corrugations or wrinkles (12) which constitute layers of fibrous material superposed in axial direction, each layer extending from the inside surface to the outside surface of the reinforcing structure (11).

6. Composite piece according to claim 5, characterized in that the fibrous tubular structure (11) is reinforced by needling.

7. Composite piece according to any one of claims 5 and 6, forming ablative thermal protection designed to be subjected to a high temperature gas flow, characterized in that the wrinkles (12) in the tubular structure (11) are oriented slantwise with respect to the axis of the structure, and in sleek-hair manner with respect to the gas flow.

**Patentansprüche**

1. Verfahren zur Herstellung einer rohrförmigen Schichtstruktur mit Schichten aus faserartigem Material, die in Axialrichtung übereinanderliegend angeordnet sind und sich jeweils von der inneren Oberfläche bis zur äußeren Oberfläche der Struktur erstrecken, dadurch gekennzeichnet, daß ein rohrförmiges Geflecht (10) verwendet und dessen Wandung auf sich selbst zurückgefaltet wird zur Bildung von Wellen oder Falten (12), welche die genannten Schichten des faserartigen Materials darstellen.

2. Verfahren nach Anspruch 1, dadurch gekennzeichnet, daß die Falten (12) schräg in Bezug auf die Achse der Struktur (11) angeordnet sind.

3. Verfahren nach einem der Ansprüche 1 und 2, dadurch gekennzeichnet, daß die Falten (12) längs der Achse der Struktur (11) variiert werden, um dieser eine variable Dicke zu geben.

4. Verfahren nach einem der Ansprüche 1 bis 3, dadurch gekennzeichnet, daß die Struktur (11) durch ein Maschengeflecht verstärkt wird.

5. Verbundteil mit einer Verstärkungsstruktur für ein durch eine Matrix verdichtetes faserartiges Rohr, dadurch gekennzeichnet, daß die Verstärkungsstruktur durch ein rohrförmiges Geflecht (10) aus faserartigem Material gebildet ist, dessen Wandung auf sich selbst zurückgefaltet ist zur Bildung von Wellen oder Falten (12), die in der axialen Richtung übereinander angeordnete Schichten aus faserartigem Material bilden und sich jeweils von der inneren Oberfläche bis zur äußeren Oberfläche der Verstärkungsstruktur (11) erstrecken.

6. Verbundteil nach Anspruch 5, dadurch gekennzeichnet, daß die faserartige Rohrstruktur (11) durch ein Maschengeflecht verstärkt wird.

7. Verbundteil nach einem der Ansprüche 5 und 6, daß einen ableitenden Wärmeschutz gegenüber einem Gasstrom hoher Temperatur bildet, dadurch gekennzeichnet, daß die Falten (12) der rohrförmigen Struktur (11) schräg in Bezug auf die Achse der Struktur und in Strömungsrichtung des Gases ausgerichtet sind.

Fig.1

10

Fig.2

a

e

12

F

13

11

12

F

10